Europäisches Patentamt

(19) European Patent Office

Office européen des brevets

(11) Numéro de publication : **0 093 638**
**B1**

(12) FASCICULE DE BREVET EUROPÉEN

(45) Date de publication du fascicule du brevet :
12.11.86

(21) Numéro de dépôt : 83400781.7

(22) Date de dépôt : 20.04.83

(51) Int. Cl.⁴ : **B 01 D 1/22**, B 01 D 5/00,
B 01 D 1/26, C 01 C 1/10,
F 24 J 3/00, F 28 F 1/04

(54) Nouveau procédé de distillation fractionnée et applications à la production d'énergie thermique ou mécanique à partir de deux sources de chaleur à bas niveau.

(30) Priorité : 30.04.82 FR 8207510

(43) Date de publication de la demande :
09.11.83 Bulletin 83/45

(45) Mention de la délivrance du brevet :
12.11.86 Bulletin 86/46

(84) Etats contractants désignés :
BE DE GB LU NL SE

(56) Documents cités :
DE-A- 1 444 337
FR-A- 2 176 668
GB-A- 279 526
US-A- 2 009 175
US-A- 2 584 785

(73) Titulaire : Etablissement Public dit: CENTRE NATIO-
NAL DE LA RECHERCHE SCIENTIFIQUE (CNRS)
15, Quai Anatole France
F-75700 Paris (FR)

(72) Inventeur : Le Goff, Pierre Laboratoire des Sciences
du
Génie Chimique Bâtiment ENSIC 1, Rue Grandville
F-54052 Nancy Cedex (FR)

(74) Mandataire : Lerner, François
5, rue Jules Lefebvre
F-75009 Paris (FR)

Jouve, 18, rue St-Denis, 75001 Paris, France

## Description

La présente invention a pour objet un nouveau procédé de distillation fractionnée et les applications de ce procédé à la production d'énergie thermique ou mécanique à partir de deux sources de chaleur à bas niveau.

Dans une demande de brevet précédente déposée par le même demandeur EP-A-0 046 112, on a déjà décrit en détail des dispositifs permettant, à partir de deux sources de chaleur à bas niveau, de délivrer de la chaleur à un niveau plus élevé, en mettant en œuvre une cascade d'opérations d'évaporation-mélangeage de solutions réactives fortement non idéales, par exemple d'eau et d'ammoniac préalablement préparées. La préparation préalable de ces solutions faisait appel à des dispositifs et procédés plus ou moins classiques de distillation ou séparation mettant en œuvre essentiellement le chauffage à un niveau élevé des solutions à régénérer en vue de leur évaporation, l'avantage étant cependant que la chaleur noble ainsi dépensée pouvait être stockée et réutilisée avec accroissement de rendement à tout moment ultérieur utile.

Dans une autre demande de brevet déposée également par le même demandeur EP-A-0 072 305, on a également décrit un procédé et un dispositif de stockage sous forme chimique d'une énergie mécanique ou thermique faisant également appel à la préparation préalable de telles solutions réactives fortement non idéales et à leur remélangeage ultérieur lorsque l'on veut récupérer l'énergie stockée. Ce brevet ne décrivait pas de moyens particuliers de régénération des solutions, étant supposé que l'on utilisait des procédés et dispositifs classiques, comme pour le brevet sus-mentionné.

L'invention, précisément, propose notamment un nouveau procédé de distillation fractionnée qui peut être mis en œuvre sans faire appel à de l'énergie thermique à niveau élevé, en utilisant au contraire et seulement deux sources de chaleur à bas niveau.

Ainsi, selon l'invention, on utilise un procédé de séparation d'une solution de composition déterminée d'au moins deux constituants dits respectivement «solvant» — plus volatil — et « soluté » moins volatil — en deux solutions de composition différente respectivement appauvrie en solvant — enrichie en soluté — ou « résidu » et enrichie en solvant — appauvrie en soluté ou « distillat », du type dans lequel on utilise une enceinte close sensiblement vide d'air maintenue sous pression voisine de celle d'ébullition de ladite solution à la température régnant à l'intérieur de ladite enceinte, laquelle comprend une paroi en contact avec une source chaude à température supérieure à celle régnant dans l'enceinte, et contre laquelle on fait circuler un film de la solution — à appauvrir en solvant — l'enceinte comprenant une autre paroi en contact avec une source froide à bas niveau, à température inférieure à celle régnant dans l'enceinte, et constituée par exemple par l'air ambiant ou le « vent froid extérieur », sur laquelle paroi se condense et circule un film de la solution enrichie en solvant, ledit procédé étant caractérisé en ce que :

— la source chaude est aussi à bas niveau, et présente une température de 20 à 30 °C plus grande que la température de la « source froide », et elle n'est pas conjuguée avec une source de chaleur à haut niveau, tel qu'un combustible liquide, solide ou gazeux ou une énergie électrique, et on recueille à la base de ladite enceinte les solutions respectives enrichies en solvant ou « distillat » et appauvries en solvant ou « résidu », produits à partir des deux films alimentés en tête de ladite enceinte,

— et on utilise plusieurs séparations successives dans lesdites enceintes disposées en cascades travaillant à des températures sensiblement identiques et à des pressions différentes étagées, l'étage de rang (n) recevant comme solution à séparer le distillat de l'étage de rang inférieur (n — 1) et le résidu de l'étage de rang supérieur (n + 1), le résidu final étant obtenu au premier étage de l'installation et le distillat final étant obtenu au dernier étage de l'installation.

Habituellement les sources chaude et froide sont trouvées dans l'environnement ambiant.

De façon avantageuse et de préférence, la source froide sera constituée par l'air ambiant ou « vent froid extérieur » tandis que la source chaude pourra être constituée de diverses sources, par exemples géothermiques ou de rejets thermiques naturels ou artificiels à bas niveau tels que des eaux résiduaires ou de lac ou de rivière.

De la description qui précède, il apparaît que le nouveau procédé de distillation conforme à l'invention met en œuvre une cascade de séparations isothermes non isobares, alors que tous les appareils connus et utilisés fonctionnent au contraire à des températures qui s'échelonnent au fur et à mesure que l'on se déplace dans la colonne de distillation, la pression régnant dans la colonne étant sensiblement la même entre le pied et la tête de la colonne, aux pertes de charges près.

Comme il apparaîtra plus clairement à l'aide de la description qui suivra, en dehors d'avantages considérables au niveau de la simplification de l'appareillage, il y a lieu sourtout de noter que le nouveau procédé de l'invention permettra la distillation ou le fractionnement de solutions en empruntant l'énergie essentielle nécessaire à cette opération à des sources chaudes et froides de bas niveau, pratiquement gratuites et inépuisables. En particulier, des études thermodynamiques approfondies montrent que l'air ambiant constitue sous nos latitudes, et à fortiori plus près des pôles, des sources considérables « d'énergie froide » infiniment supérieures aux besoins humains.

Pour la mise en œuvre du procédé, on utilisera essentiellement un appareillage dans lequel la partie des appareils qui est au contact de la source d'air en mouvement sera formée d'une surface recevant intérieurement une partie du mélange à séparer qui ruisselle sur elle sous forme d'un film mince et recevant extérieurement des ailettes d'échange thermique placées sensiblement parallèlement à la direction du « vent ».

Exemplairement, une installation pourra comprendre essentiellement des batteries de tubes ailetés disposés sensiblement verticalement comme un rideau d'arbres dans le vent.

Si la source chaude est constituée par un fluide caloporteur tel qu'une eau résiduaire ou une eau géothermique ou de rivière, les appareils auront avantageusement la forme de tubes ailetés extérieurement sur la paroi interne desquels ruisselle une partie du mélange à séparer et comportant un tube intérieur parcouru intérieurement par ledit fluide caloporteur et sur la paroi extérieure desquels circule l'autre partie du mélange à séparer, lesdits tubes étant disposés sensiblement verticalement et recevant à leur partie haute le mélange à séparer, le résidu et le distillat formés étant recueillis en partie basse.

A partir du résidu et du distillat formés, il devient alors facile, en utilisant des opérations de remélangeage du type décrit aux brevets précédemment cités, ou d'autres opérations spécialement adaptées, de recueillir l'énergie mécanique ou thermique désirée.

L'invention, ses objets et avantages apparaîtront plus clairement à l'aide de la description qui va suivre faite en référence aux dessins annexés dans lesquels :

la figure 1 montre schématiquement un étage du procédé de séparation conforme à l'invention ;

la figure 2 montre schématiquement en coupe verticale un appareil utilisable dans les schémas précédents ;

la figure 3 montre, comme la figure 2, une variante d'un autre appareil ;

la figure 4 est une coupe horizontale faite selon le plan VI-VI de la figure 3 ;

la figure 5 montre schématiquement la mise en œuvre du procédé de l'invention dans une cascade isotherme à quatre étages ;

la figure 6 montre une installation semblabe à celle de la figure 2, mais utilisant un schéma de circulation quelque peu différent ;

la figure 7 montre schématiquement en vue perspective comment peuvent être disposés en batterie des appareils du type illustré aux figures 3 et 4 ;

la figure 8 montre, comme la figure 7, une disposition en batterie de tubes ailetés à section circulaire ;

la figure 9 montre, comme les figures 6 et 2, une autre variante d'un appareil permettant la mise en œuvre du procédé de l'invention ;

la figure 10 montre en coupe horizontale comment peuvent être intégrés les tubes d'échange conformes à l'invention pour une meilleure utilisation de l'énergie du vent ;

la figure 11 montre un montage en batterie à quatre étages d'appareils du type illustré à la figure 9 ;

la figure 12 montre schématiquement une application de l'invention à la production de chaleur à haut niveau à partir d'une source chaude et d'une source froide à bas niveau ;

la figure 13 montre comme la figure 6 une variante du procédé de l'invention.

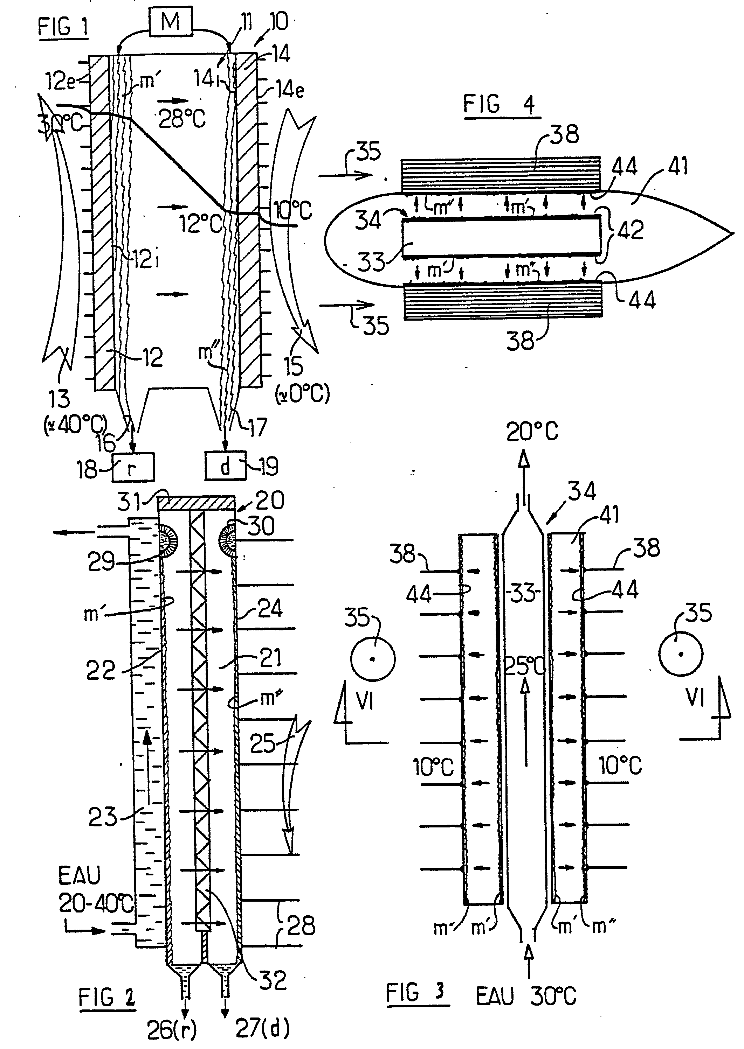

On se reportera tout d'abord à la figure 1 expliquant le principe de base de la distillation « isotherme » conforme à l'invention.

Le mélange à fractionner M est amené sous forme liquide en tête d'un appareil 10 constitué essentiellement d'une enceinte 11 close vide d'air dans laquelle on fait ruisseler deux films m du mélange M à distiller ou fractionner. Pour différencier ces deux films sur la figure 1, on a repéré l'un m' et l'autre m". Le film m' est placé en contact avec une source « chaude », tandis que l'autre film m" est placé en contact avec une source « froide ». Dans l'exemple illustré, ceci est obtenu simplement en faisant ruisseler le film m' sur une paroi 12 de l'enceinte 11 dont la face extérieure 12e est en contact thermique avec la source chaude schématisée par la flèche 13, le film m' ruisselant sur la face interne 12i de la surface 12. De la même façon, le film m" ruisselle sur la face interne 14i de la paroi 14 de l'enceinte 11, la surface extérieure 14e de la paroi 14 étant en contact avec la source froide schématisée par la flèche 15.

Dans un exemple typique, la source chaude pourra être constituée par exemple par une eau résiduaire vers 40 °C, et la source froide par un vent froid vers 0 °C. Les températures s'établiront dans l'enceinte 11 comme indiqué par la courbe de températures à la figure 1.

Les films m' et m" ayant au départ, c'est-à-dire en haut de l'enceinte 11, sensiblement la même composition, le film chaud m' s'appauvrit au fur et à mesure qu'on s'abaisse dans la colonne en solvant volatil, puisque ce solvant se vaporise, au profit du film froid m" qui s'enrichit. On recueille donc en bas de l'enceinte 11 respectivement en 16 un « résidu » appauvri en solvant volatil et en 17 un « distillat » enrichi en solvant volatil, ces solutions pouvant être stockées comme indiqué en 18, 19.

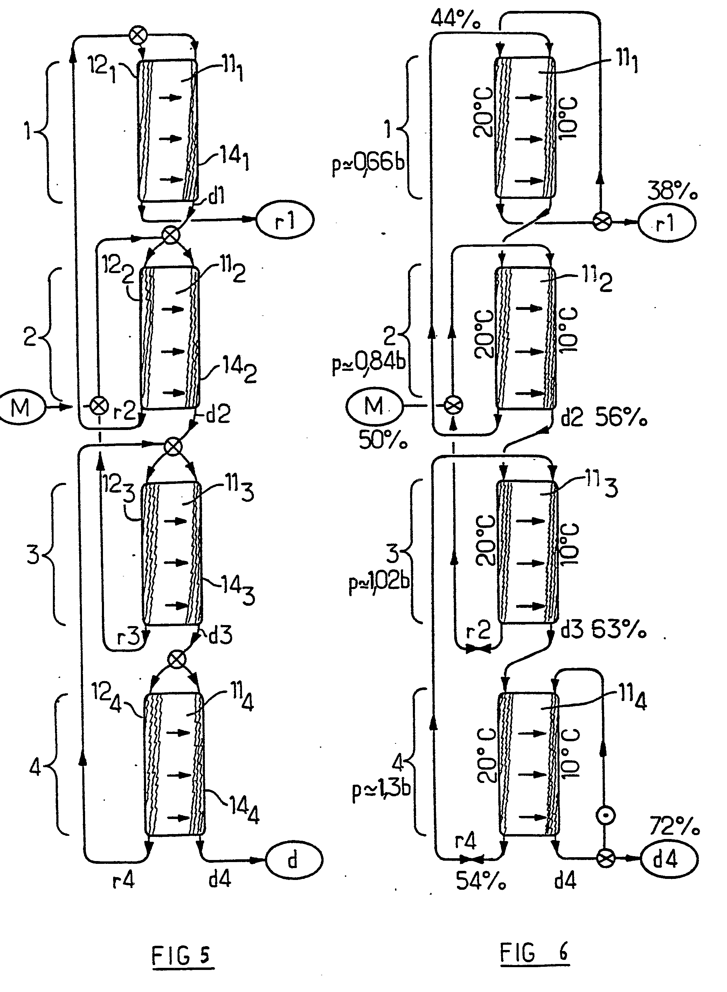

En une seule étape de distillation telle qu'illustrée à la figure 1 on ne peut évidemment réaliser qu'un fractionnement partiel de la solution M. Si l'on veut effectuer un fractionnement plus poussé, il suffit d'effectuer plusieurs opérations successives ou « en série » du même type. On se reportera à la figure 5 où l'on décrit le principe d'un tel fractionnement utilisant quatre enceintes telles que 11 travaillant en série.

Dans l'exemple illustré à la figure 5, quatre enceintes $11_1$, $11_2$, $11_3$, $11_4$, identiques sont utilisées. Dans l'exemple illustré, on a supposé que les parois « chaudes » $12_1$, $12_2$, $12_3$, $12_4$, se trouvaient à 20 °C, tandis que les parois « froides » $14_1$, $14_2$, $14_3$, $14_4$, se trouvaient à 10 °C. Le mélange à séparer M est introduit en haut de

l'enceinte $11_2$ du deuxième étage. En bas de cet étage, on recueille donc un résidu r2 appauvri en solvant volatil et un distillat d2 enrichi en solvant volatil. Le résidu r2 appauvri est envoyé en tête du premier étage, en bas duquel on recueille un résidu r1 sur-appauvri en solvant volatil et un distillat d1 enrichi en comparaison du résidu r2. En pratique, le distillat d1 aura une composition sensiblement identique au mélange M de départ, dans l'exemple illustré, ce distillat d1 est donc recyclé en même temps que le mélange M en tête du deuxième étage.

Le distillat d2 enrichi provenant du deuxième étage est admis en tête du troisième étage, en bas duquel on recueille un résidu r3 appauvri par rapport à la concentration du distillat d2 et un distillat d3 enrichi par rapport à la composition du distillat d2. En pratique, le résidu r3 appauvri par rapport au distillat d2 enrichi du mélange M aura sensiblement la composition de ce mélange. Il est donc recyclé avec lui en tête du second étage.

Le distillat d3 enrichi par rapport au distillat d2 est envoyé en tête du quatrième étage, en bas duquel on recueille un résidu r4 appauvri par rapport à d3 et un distillat d4 enrichi par rapport à d3, doublement enrichi par rapport à d2 et triplement enrichi par rapport au mélange M. Le résidu r4 appauvri par rapport au distillat d3 enrichi aura en pratique sensiblement la même composition que le distillat d2 et pourra en conséquence être recyclé en tête du troisième étage en même temps que le distillat d2. En définitive, on retire de la colonne un résidu r1 appauvri et un distillat d4 enrichi, et l'on a travaillé dans l'installation en quatre étapes successives réalisant une distillation fractionnée. Cette distillation fractionnée en quatre étages se fait cependant isothermiquement en ce sens que chaque étage travaille entre la même température « chaude » et la même température « froide ». Bien entendu, les pressions aux différents étages sont différentes, puisque les conditions d'équilibre des mélanges varient selon chaque étage, les pressions étant d'autant plus élevées que le distillat produit est plus riche, autrement dit les pressions allant en croissant du premier au dernier étage.

On notera que les résidus et distillats obtenus au pied de chaque étage se présentent sous forme liquide et qu'il suffit pour assurer la circulation des débits selon le schéma indiqué, de profiter de la différence des pressions régnant entre les étages pour ce qui est du recyclage des résidus, tandis que de simples pompes de circulation suffiront pour faire passer les distillats de l'étage d'un rang donné à l'étage de rang supérieur. Ces pompes de circulation n'ont pas été illustrées au schéma pour ne pas le surcharger.

Le procédé de distillation ou de séparation « isotherme » conforme à l'invention peut être utilisé pour effectuer la séparation ou distillation de n'importe quel mélange liquide. Cependant, une application particulièrement importante de l'invention étant la valorisation de l'énergie thermique à bas niveau puisant notamment pour ce qui est de la source froide, dans le réservoir d'énergie pratiquement illimité que constitue le « vent froid », on utilisera avantageusement la séparation décrite pour préparer les « résidus » et « distillats » à partir de solutions réactives fortement non idéales dans lesquelles il existe une chaleur de dissolution relativement importante lorsqu'on met en présence le « résidu » et le « distillat ».

Parmi de telles solutions, on peut citer notamment des solutions du type mentionnées au brevet EP-A-0 046 112 ci-avant cité, et notamment des solutions telles que eau/ammoniac ou eau/bromure de lithium.

Bien entendu, le schéma de principe de la figure 5 peut être utilisé avec un nombre d'étages quelconque, la séparation des constituants résidu et distillat étant d'autant plus poussée que le nombre d'étages sera grand et que chaque étage pourra travailler entre des températures plus différentes donc plus favorables au fractionnement. Les pressions s'autoréguleront d'elles-mêmes d'un étage au suivant, à la seule condition de maintenir aux premier et dernier étages les pressions convenables, et de maintenir dans chaque étage le débit de circulation optimal.

On décrira maintenant, en faisant référence à la figure 6, une organisation de l'installation légèrement différente de celle illustrée à la figure 5, en chiffrant un exemple de fonctionnement de cette installation pour un couple solvant/soluté ammoniac/eau.

Dans l'exemple illustré à la figure 6, on introduit un mélange M ayant pour composition 50 % ammoniac/50 % eau (pourcentages en poids) au deuxième étage de l'installation. On a supposé que comme dans le cas de la figure 5, le film interne « chaud » ruisselant à l'intérieur de chaque enceinte était à 20 °C, tandis que le film « froid » était à 10 °C. Contrairement à ce qui a été décrit à la figure 5, le mélange est amené au deuxième étage uniquement du côté du film froid qui forme donc le distillat d2 enrichi qui vient alimenter le film chaud de l'étage inférieur de rang supérieur. En bas de l'enceinte $11_3$, on recueille côté du film chaud le résidu r3 appauvri qui est recyclé avec le mélange M en tête du deuxième étage côté du film froid. Au troisième étage, le film froid est alimenté par le résidu du quatrième étage r4 et par la vapeur d'ammoniac distillée à partir du film chaud du même étage pour former le distillat enrichi d3. Le distillat d3 formé au troisième étage est amené en tête du quatrième étage côté du film chaud. Côté du film froid, on recueille au quatrième étage le distillat final d4 dont une partie est recueillie et stockée et une autre partie est recyclée en tête du film froid du quatrième étage.

Pour les premier et second étages, on procède comme pour le troisième et le quatrième étages, le distillat recueilli à l'étage du rang inférieur étant amené en tête de l'étage de rang supérieur côté film chaud, tandis que le résidu de l'étage de rang supérieur est recyclé en tête de l'étage de rang inférieur côté film froid. En évitant de mélanger le distillat de l'étage de rang inférieur avec le résidu de l'étage de rang supérieur, on améliore le rendement de l'installation en mettant à profit les légères différences de composition entre ces distillats et ces résidus. On notera qu'au premier étage, on procède, pour alimenter le film côté chaud, à un recyclage d'une partie r1 final.

A la figure 6, on a indiqué pour le couple eau/ammoniac de solution considérée et pour les conditions de températures supposées régner dans les enceintes $11_1$, $11_2$, $13_3$, $14_4$, les diverses conditions de pression et de composition régnant aux divers endroits de l'installation. On note que les pressions sont étagées de 0,66 bar au premier étage à 1.3 bar au quatrième étage, tandis que le résidu final r1 titre 38 % en ammoniac et le distillat final d4 72 %.

Bien entendu, ces conditions d'équilibre varient selon les conditions de températures des sources chaudes et des sources froides disponibles. En outre, si l'on veut effectuer une séparation plus poussée, il suffit d'utiliser un plus grand nombre d'étages. On peut ainsi calculer qu'avec une « force motrice » de 10 °C entre film chaud et film froid, il est nécessaire d'utiliser 23 à 25 étages pour séparer pratiquement de l'eau et de l'ammoniac purs, tandis que si la « force motrice » augmente à 20 °C, par exemple entre un film chaud à 30 °C et un film froid à 10 °C, treize étages seront suffisants.

On notera d'ailleurs que lorsque l'installation est destinée à produire finalement de l'énergie mécanique ou calorifique, le fonctionnement sera d'autant meilleur que cette « force motrice » sera plus grande. En particulier, s'il fait très froid dehors, la grande « froideur » du vent permettra de faire fonctionner l'installation de façon beaucoup plus efficace que lorsque le vent n'est pas froid. En d'autres termes, on se chauffera d'autant plus facilement que les conditions climatiques seront rudes, et plus il fera froid dehors, plus il sera facile de se chauffer à l'intérieur d'une habitation.

On décrira maintenant, en faisant référence à la figure 2, la structure d'un appareil formant un étage de fractionnement tel que ceux schématisés aux figures précédentes.

L'appareil tel que représenté repéré 20 dans son ensemble comprend une enceinte étanche 21 comportant, à faible distance l'une de l'autre, deux parois 22, 24 sur lesquelles ruissellent respectivement le film chaud m' et le film froid m". Les parois 22, 24 sont bonnes conductrices de la chaleur, par exemple métalliques, convenablement traitées pour résister aux solutions utilisées. La paroi « chaude » 22 est en contact thermique avec le fluide 23 constituant la source chaude, par exemple une eau résiduaire vers 20 ou 40 °C. La paroi « froide » 24 est pourvue d'ailettes 28 qui assurent un bon contact avec l'air ambiant constituant la source froide 25 par exemple vers 10 °C. Il est à noter que le phénomène de froid peut être augmenté en soumettant les ailettes à un brouillard d'eau dont la vaporisation créera du froid si nécessaire.

En tête de la colonne, le film chaud m' est alimenté par un distributeur 29, tandis que le film froid est alimenté par un distributeur 30. On recueille en pied de colonne le résidu 26 (r) de l'étage et le distillat 27 (d) respectivement appauvri et enrichi en solvant volatil. Une isolation thermique 31 complète la construction en partie supérieure et une paroi 32 constituée d'un garnissage poreux formant dévésiculeur interdisant le passage accidentel de gouttelettes de liquide du film m' au film m" et inversement.

L'appareil peut présenter la forme générale d'un parallélépipède plat de hauteur et de longueur adaptées à la puissance requise de l'installation. On notera que la paroi 24 sera orientée sensiblement parallèlement à la direction principale du vent qui s'engouffrera entre les ailettes.

On se reportera maintenant aux figures 3, 4 et 7 illustrant un autre mode de construction d'un étage de séparation conçu selon l'invention.

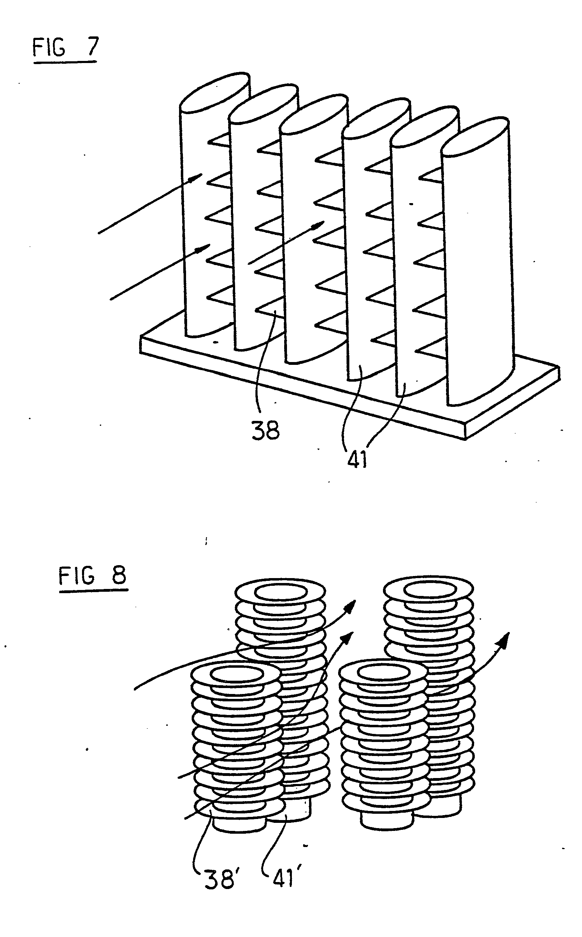

Selon l'exemple de réalisation illustré à ces dessins, l'appareil séparateur comprend une enceinte étanche 41 constituée d'un tube profilé de façon générale en aile d'avion dirigé face au vent, indiqué par les flèches 35. De façon à améliorer l'échange thermique avec le vent, les parois externes des profilés sont pourvues d'ailettes 38. A l'intérieur du tube formant l'enceinte 41, et coaxialement à lui, est disposé un autre tube 34 traversé par le fluide chaud, par exemple une eau résiduaire à 30 °C. Les tubes sont avantageusement disposés sensiblement verticalement, l'eau chaude pénétrant à la base et sortant en partie haute, les films chauds m' ruisselant sur les parois 42 du tube 34 et les films froids m" ruisselant sur les parois froides 44 de l'enceinte 41. Plusieurs tubes peuvent être groupés verticalement parallèlement comme indiqué à la figure 7, chaque tube pouvant constituer un étage d'une unité de séparation.

Selon la variante de réalisation illustrée à la figure 8, les enceintes 41' ont une section sensiblement circulaire qui sont pourvues d'ailettes 38' à section également circulaire. Bien entendu, le tube central parcouru par le fluide chaud est également circulaire (non représenté). Cette structure fonctionne de la même façon que celle de la figure 7 et par sa constitution est omnidirectionnelle, la direction du vent n'ayant pas d'influence sur le rendement.

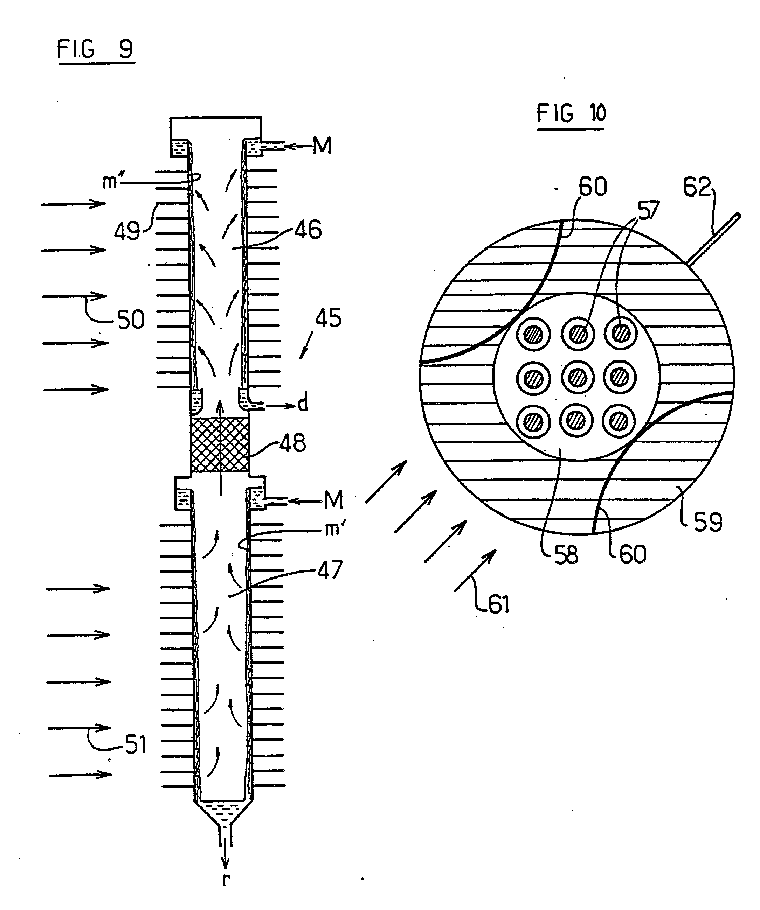

Selon la variante de réalisation illustrée à la figure 9, l'appareil 45 constituant un étage de fractionnement travaillant à une pression déterminée comporte essentiellement deux enceintes respectivement froide formant condenseur 46 et chaude formant évaporateur 47 fermées de façon étanche et communiquant entre elles, avantageusement au travers d'un garnissage poreux formant dévésiculeur 48. Le condenseur 46 est pourvu d'ailettes 49 externes exposées au vent froid schématisé par les flèches 50, tandis que l'évaporateur est placé au contact de la source chaude, par exemple de l'eau tiède, vers 20 ou 30 °C s'écoulant comme schématisé par les flèches 51. Dans le condenseur 46 et sur les parois internes de cette enceinte ruisselle le film m" froid qui va s'enrichir en vapeur de solvant volatil qui s'évapore du film chaud m' s'écoulant sur la paroi interne de l'enceinte 47 chaude formant évaporateur. Le mélange M à séparer est amené comme indiqué aux figures 1, 5 et 6 en tête du condenseur 46 pour alimenter les films m" et en tête de l'évaporateur 47 pour alimenter les films m'. En bas du condenseur, on recueille le distillat d enrichi en solvant volatil et en bas de l'évaporateur 47 on recueille le résidu appauvri en solvant volatil.

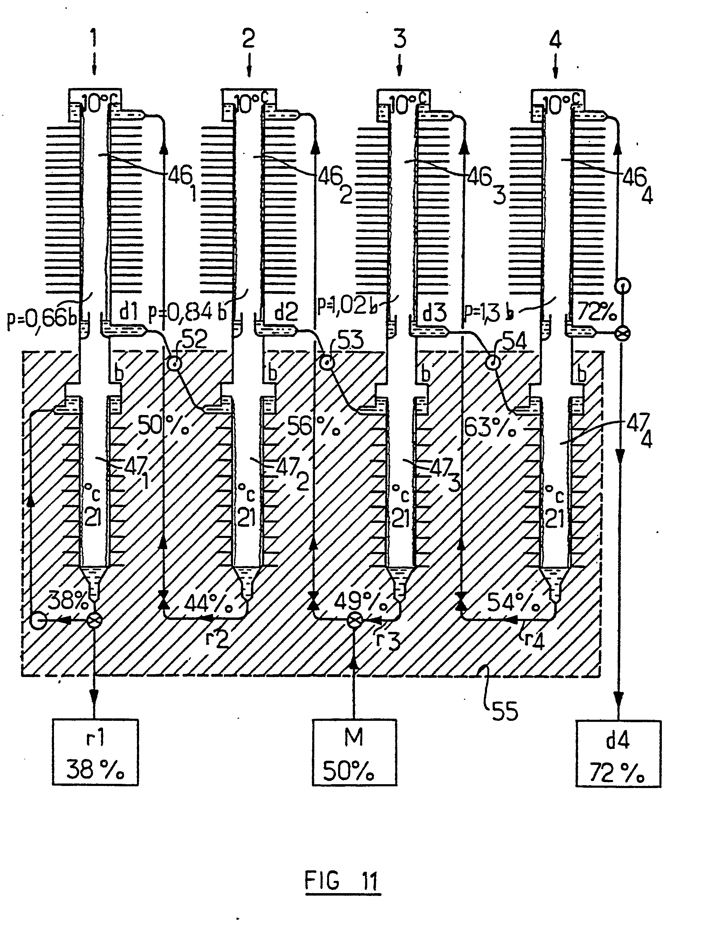

La figure 11 montre un groupement de quatre étages en série de tels appareils connectés selon une organisation identique à celle de la figure 6. Trois pompes repérées 52, 53, 54 permettent de faire passer les distillats d1, d2, d3 recueillis aux trois premiers étages en tête des évaporateurs à pression supérieure des étages de rang supérieur. Les conditions de fonctionnement de l'installation étant supposées identiques à celles de l'installation décrite en relation avec la figure 6, on retrouve en tête du premier étage et au pied du dernier étage les mêmes résidus et distillats préparés à partir de la même solution d'approvisionnement, de sorte que la description du fonctionnement de cette installation ne sera pas répétée.

Pour son fonctionnement, il suffira en pratique que les condenseurs soient exposés au vent froid, tandis que les évaporateurs seront baignés dans une enceinte repérée 55 qui contiendra par exemple de l'eau résiduaire à la température de la source chaude.

Bien entendu, et comme pour le schéma de la figure 6, un nombre quelconque d'étages peut être utilisé en série, le nombre étant d'autant plus grand que l'on veut réaliser une séparation plus poussée.

Selon le mode de réalisation illustré à la figure 10, on optimise le rendement d'échange des tubes ailetés refroidis par le vent en montant ces tubes à l'intérieur d'une structure directionnelle canalisant le vent.

Selon l'exemple illustré à la figure 10, neuf tubes d'échange ailetés 57 sont montés sur une plate-forme fixe 58. Cette plate-forme est entourée par un plateau annulaire tournant 59 sur lequel se dressent les deux parois 60 d'une tuyère directionnelle dans laquelle s'engouffre le vent selon les flèches 61. La tuyère est orientée par une plaque 62 formant queue de girouette se plaçant automatiquement dans le lit du vent et solidaire du plateau tournant 59. Ainsi est canalisé sur les tubes 57 un flux maximum d'air augmentant l'efficacité de la source froide que constitue le vent. Les tubes 57 peuvent être des tubes tels que ceux de la figure 8 ou encore des tubes de condenseur tels que ceux de la figure 11.

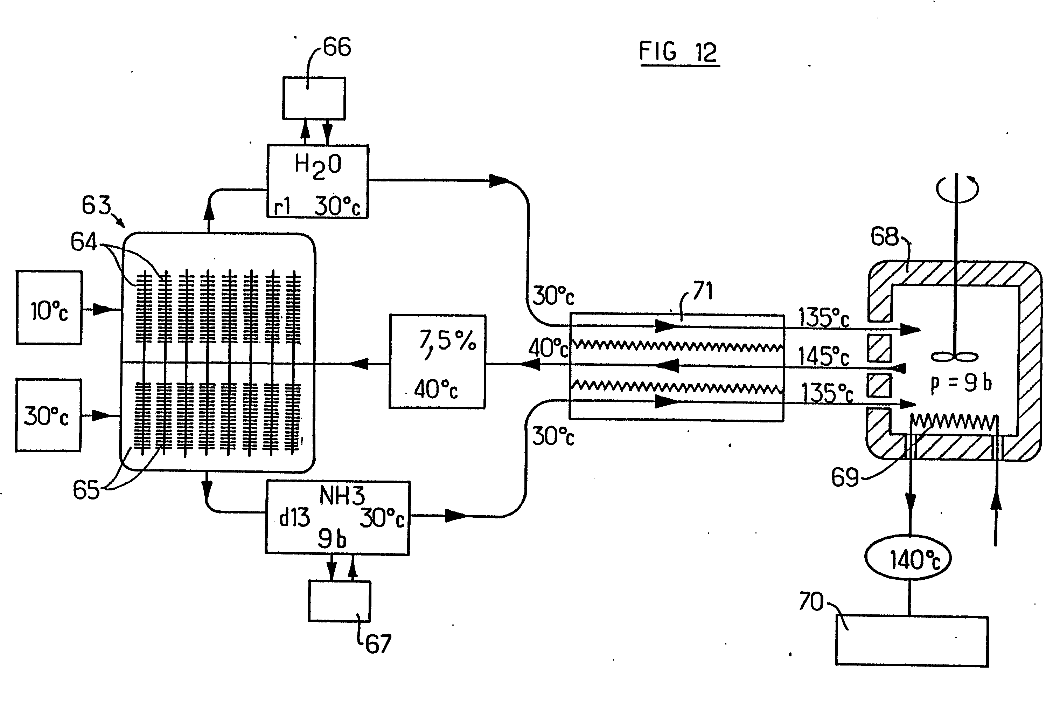

On se reportera maintenant à la figure 12 dans laquelle on a décrit une application de l'invention au chauffage d'un fluide à relativement haute température, soit 140 °C dans l'exemple indiqué. L'installation décrite à la figure 12 fonctionne à partir d'un mélange eau/ammoniac et de condenseurs-évaporateurs du type décrit et groupés selon le schéma de la figure 11.

Le séparateur repéré dans son ensemble 63 est composé de treize étages groupés en série de façon semblable aux quatre étages de la figure 11. Ces treize étages comprennent treize tubes condenseurs 64 (analogues aux tubes condenseurs 46) et treize tubes évaporateurs 65 (analogues aux tubes évaporateurs 47) (huit tubes seulement ayant été représentés sur la figure 12). Les tubes 64 sont exposés à une source de froid, par exemple le vent, qui permettra de les porter vers 10 °C, tandis que les tubes 65 sont soumis à une source de chaleur, par exemple une eau résiduaire à 30 °C.

En pied du premier étage d'évaporateur $65_1$, on recueille de l'eau pratiquement pure qui sort de l'installation 63 à 30 °C et qui peut éventuellement être stockée comme indiqué en 66. En pied du dernier étage de condenseur $64_{13}$, on recueille le distillat d13 constitué par de l'ammoniac pratiquement pur sous la pression de 9 bars qui est réchauffé à 30 °C par la source de chaleur avant de sortir de l'installation en étant éventuellement stocké comme indiqué en 67.

Lorsqu'on veut produire de la chaleur à haute température, on admet en mélange dans une enceinte étanche thermiquement isolée 68 l'eau pure produite par l'installation ou provenant du stockage 66 et l'ammoniac pur produit par l'installation ou provenant du stockage 67. Dans ces conditions, le mélange se fait de façon adiabatique, c'est-à-dire sans apport de chaleur extérieure, et produit un mélange à 7,5 % d'ammoniac à 145 °C sous pression de 9 bars, l'augmentation de température provenant de l'abandon de la chaleur de dilution des solutions. Cette chaleur est extraite de l'enceinte 68 par un circuit d'échange 69 constitué par exemple par un serpentin d'eau sous pression pouvant ainsi produire de la chaleur par exemple à 140 °C pour toute utilisation appropriée 70.

La solution mélangée sortant du mélangeur 68 traverse un échangeur de chaleur 71 qui assure le préchauffage de l'eau et de l'ammoniac jusque vers 135 °C avant leur alimentation au mélangeur 68 comme indiqué à la figure. Le mélange M sort de l'échangeur vers 40 °C avec une concentration d'ammoniac ramenée à 7,5 %. Cette solution de mélange est ramenée dans l'installation 63, précisément entre le deuxième et le troisième étage de l'installation, deux étages assurant la production du résidu r1 d'eau pure et onze étages la production du distillat d13 d'ammoniac pur. L'installation peut servir par exemple à la préparation de vapeur d'eau moyenne pression à partir comme source froide du vent froid et comme source chaude d'eau résiduaire vers 30 °C, l'installation ne comportant pratiquement aucun organe mécanique à part quelques pompes de circulation de liquide, le fonctionnement est très fiable et la consommation énergétique très faible.

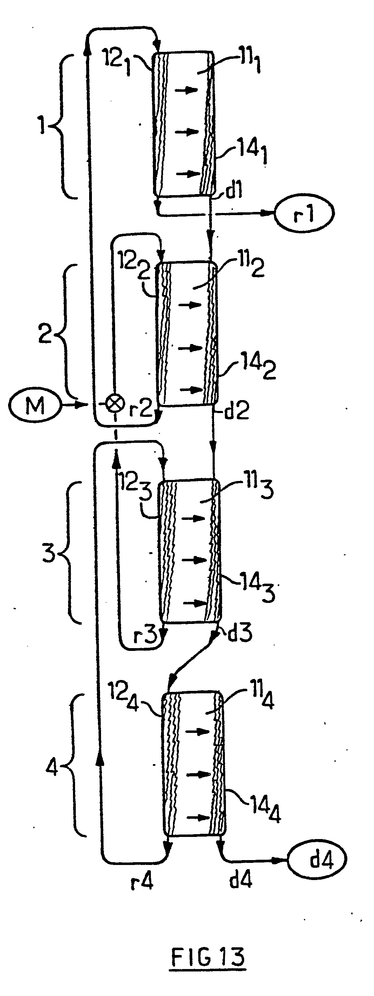

On se reportera maintenant à la figure 13 dont le schéma ne diffère de celui de la figure 3 que par les points suivants :

1. Le distillat issu de l'étage n est introduit en tête de l'étage (n + 1) du côté du film froid (et non pas du film chaud), sauf pour le dernier.

2. Le résidu issu de l'étage n est introduit en tête de l'étage (n — 1), du côté chaud (et non plus du côté froid).

3. Le premier et le dernier étages ne comportent aucun circuit de recyclage des produits.

Le schéma de cette figure a l'avantage d'être plus simple et de consommer moins d'énergie que celui de la figure 3.

## Revendications

1. Procédé de séparation d'une solution de composition déterminée (M) d'au moins deux constituants dits respectivement « solvant » — plus volatil — et « soluté » moins volatil — en deux solutions de composition différente respectivement appauvrie en solvant — enrichie en soluté — ou « résidu » (r) et enrichie en solvant — appauvrie en soluté ou « distillat » (d), du type dans lequel on utilise une enceinte close (11, 21, 41, 46-47) sensiblement vide d'air maintenue sous pression voisine de celle d'ébullition de ladite solution (M) à la température régnant à l'intérieur de ladite enceinte, laquelle comprend une paroi (12, 22, 42) en contact avec une source chaude à température supérieure à celle régnant dans l'enceinte, et contre laquelle on fait circuler un film (m') de la solution — à appauvrir en solvant — l'enceinte comprenant une autre paroi (14, 24, 44) en contact avec une source froide à bas niveau, à température inférieure à celle régnant dans l'enceinte, et constituée par exemple par l'air ambiant ou le « vent froid extérieur », sur laquelle paroi se condense et circule un film (m") de la solution enrichie en solvant, ledit procédé étant caractérisé en ce que :

— la source chaude est aussi à bas niveau, et présente une température de 20° à 30 °C plus grande que la température de la « source froide », et elle n'est pas conjuguée avec une source de chaleur à haut niveau, tel qu'un combustible liquide, solide ou gazeux, ou une énergie électrique, et on recueille à la base de ladite enceinte les solutions respectives enrichies en solvant ou « distillat » (d) et appauvries en solvant ou « résidu » (r), produits à partir des deux films (m', m") alimentés en tête de ladite enceinte,

— et on utilise plusieurs séparations successives dans lesdites enceintes disposées en cascades travaillant à des températures sensiblement identiques et à des pressions différentes étagées, l'étage de rang (n) recevant comme solution à séparer le distillat (d) de l'étage de rang inférieur (n — 1) et le résidu (r) de l'étage de rang supérieur (n + 1), le résidu final étant obtenu au premier étage de l'installation et le distillat final étant obtenu au dernier étage de l'installation.

2. Procédé selon la revendication 1, caractérisé en ce que la source chaude est constituée par la chaleur géothermique, la chaleur issue d'un capteur solaire et/ou des sources de rejets thermiques naturels ou artificiels à bas niveau.

3. Procédé selon la revendication 1 ou 2, caractérisé en ce que le résidu ($r_{n+1}$) de l'étage (n + 1) est introduit à l'étage n côté formation du distillat ($d_n$) et le distillat ($d_{n-1}$) de l'étage (n — 1) est introduit à l'étage n côté formation du résidu ($r_n$) et le résidu final ainsi que le distillat final sont en partie recyclés respectivement au premier étage côté formation du résidu ($r_1$) et au dernier étage côté formation du distillat ($d_N$).

4. Procédé selon la revendication 1 ou 2, caractérisé en ce que le résidu ($r_{n+1}$) de l'étage (n + 1) est introduit à l'étage n, côté formation du résidu ($r_n$) et le distillat ($d_{n-1}$) de l'étage (n — 1) est introduit à l'étage n, côté formation du distillat ($d_n$).

5. Procédé selon l'une des revendications précédentes, caractérisé en ce que la solution initiale M à séparer est introduite à un étage intermédiaire de la cascade.

6. Procédé de chauffage à une température donnée formant pompe thermodynamique à chaleur utilisant essentiellement un transfert de chaleur entre une source chaude et une source froide à niveaux inférieurs à la température de chauffage souhaitée et utilisant la chaleur de remélangeage de deux solutions réactives fortement non idéales d'un « résidu » (r) et d'un « distillat » (d) préparés dans une unité de séparation mise en œuvre selon l'une quelconque des revendications précédentes, ledit procédé étant caractérisé en ce que ledit résidu (r) et ledit distillat (d) sont mélangés sous la pression appropriée dans un mélangeur (68) étanche dans lequel la chaleur de remélangeage est dissipée et récupérée pour l'utilisation (70) et la solution mélangée est renvoyée en tête de l'unité de séparation (63) après traversée d'un échangeur de chaleur (71) assurant le préchauffage du résidu (r) et du distillat (d) avant leur introduction audit mélangeur.

7. Appareil pour la mise en œuvre du procédé selon l'une quelconque des revendications précédentes, l'une des sources froide ou chaude au moins étant constituée par l'air ambiant mis en mouvement et additionné ou non d'eau sous forme quelconque, comprenant en combinaison :

— des enceintes closes étanches (11, 21, 41, 46-47) ayant des parois en regard (12, 14 ; 22, 24 ; 42, 44) sur chacune desquelles ruisselle un film mince (m', m") des solutions traitées,

— un distributeur (29, 30) desdites solutions en tête de chaque enceinte,

— des dispositifs d'évacuation en pied d'enceinte pour recueillir les solutions traitées ayant ruisselé,

— ladite paroi (14, 22, 44) sur la face interne de laquelle ruisselle le film mis en contact thermique avec l'air ambiant présentant sur sa face externe des ailettes d'échange thermiques placées sensiblement parallèlement à la direction du « vent ».

8. Appareil selon la revendication 7, caractérisé en ce que l'une des sources froide ou chaude au moins étant constituée par l'air ambiant mis en mouvement et additionné ou non d'eau sous forme quelconque, et l'autre étant constituée par un fluide caloporteur tel que de l'eau, lesdits appareils ont la forme de tubes (41, 41') ailetés extérieurement sur la paroi interne desquels ruisselle une partie du mélange à séparer et comportant un tube intérieur (34) parcouru intérieurement par ledit fluide caloporteur et sur la paroi extérieure duquel circule l'autre partie du mélange à séparer, lesdits tubes étant disposés sensiblement verticalement et recevant à leur partie haute le mélange à séparer M, le résidu (r) et le distillat (d) formés étant recueillis en partie basse.

9. Appareil selon la revendication 8, caractérisé en ce que lesdits tubes ailetés (41) ont un profilé aérodynamique en aile d'avion ou ellipse.

10. Appareil selon la revendication 8, ou la revendication 9, caractérisé en ce que les tubes ailetés (57) sont montés sur une embase (58) qui porte une structure orientable (59, 60, 62) de canalisation du vent en direction desdits tubes.

11. Appareil selon la revendication 7, caractérisé en ce qu'ils sont constitués essentiellement de deux tubes (46, 47) communiquant par une extrémité, l'un desdits tubes (46) soumis extérieurement au contact de la source froide recevant en partie haute intérieurement le mélange M à séparer, et une solution formant distillat (d) étant recueillie à sa base, l'autre desdits tubes (47) soumis extérieurement au contact de la source chaude recevant en partie haute intérieurement le mélange M à séparer, et une solution formant résidu (r) étant recueillie à sa base.

12. Appareil selon la revendication 11, caractérisé en ce que lesdits tubes sont disposés sensiblement coaxialement en superposition.

**Claims**

1. Process for separating a solution of known composition (M) of at least two constituents called respectively « solvent » (the more volatile) and « solute » (the less volatile) into two solutions of different composition respectively reduced in solvent content enriched in solute or « residue » (r), and enriched in solvent content reduced in solute or « distillate » (d), of the type in which there is used a closed chamber (11, 21, 41, 46-47) substantially empty of air maintained at a pressure close to that of the boiling pressure of the said solution (M) at the temperature prevailing in the interior of the said chamber, which comprises a wall (12, 22, 42) in contact with a heat source at a temperature higher than that prevailing in the chamber, and against which a film (m') of the solution to be reduced in solvent is circulated, the chamber comprising another wall (14, 24, 44) in contact with a cold source at low level, at a temperature lower than that prevailing in the chamber, and constituted for example by the ambient air or the « cold outside wind » on which wall a film (m'') of the solution enriched in solvent condenses and circulates, the said method being characterised in that :
— the heat source is also at low level, and is at a temperature 20° to 30°C higher than the « cold source », and it is not associated with a heat source at high level, such as a combustible liquid, solid or gas or electrical energy, and the respective solutions enriched in solvent content or « distillate » (d) and reduced in solvent content or « residue » (r), are recovered at the base of said chamber, produced from the two films (m', m'') supplied to the top of the said chamber ;
— and several successive separations are utilised in the said chambers arranged in cascades operating at substantially identical temperatures and at staged pressures, the stage of rank (n) receiving as a solution to be separated the distillate (d) from the lower ranked stage (n — 1) and the residue (r) from the higher ranked stage (n + 1), the final reside being obtained from the first stage of the installation and the final distillate being obtained from the last stage of the installation.

2. Method according to Claim 1, characterised in that the heat source is constituted by geothermal heat, heat from a solar panel and/or natural or artificially-caused low level thermal eruptions.

3. Method according to Claim 1 or 2, characterised in that the residue $(r_{n+1})$ from the stage (n + 1) is introduced into the stage n on the distillate $(d_n)$ forming side and the distillate $(d_{n-1})$ from the stage (n — 1) is introduced into the stage n on the residue $(r_n)$ forming side such that the final residue as well as the final distillate are in part recycled respectively to the first stage adjoining where residue $r_1$, is formed, and to the last stage where distillate $d_N$ is formed beside formation of the distillate $(d_N)$.

4. Method according to Claim 1 or 2, characterised in that the residue $(r_{n+1})$ from the stage (n + 1) is introduced into the stage n, on the residue $(r_n)$ forming side and the distillate $(d_{n-1})$ from the stage (n — 1) is introduced into the stage n, on the distillate $(d_n)$ forming side.

5. Method according to any one of the preceding claims, characterised in that the initial solution M to be separated is introduced to a stage intermediate to the cascade.

6. Process of heating to a given temperature forming a thermodynamic heat pump using essentially a transfer of heat between a heat source and a cold source at levels below the desired temperature of heating and using the heat of remixing of two strongly reactive non ideal solutions of a « residue » (r) and of a « distillate » (d) prepared in a separation unit operated in accordance with any one of the preceding claims, the said method being characterised in that the said residue (r) and the said distillate (d) are mixed under the appropriate pressure in a fluid-tight mixer (68) in which the heat of remixing is dissipated and recovered for use (70) and the mixed solution is carried to the top of the separation unit (63) after traversing a heat-exchanger (71) for preheating the residue (r) and the distillate (d) before their introduction into the said mixer.

7. Apparatus for operation of the method according to any one of the preceding claims, at least one of the heat or cold sources being constituted by the ambient air set in motion and with or without the addition of water in any form, comprising, in combination :

— closed fluid-tight chambers (11, 21, 41, 46-47) having facing walls (12, 14 ; 22, 24 ; 42, 44) down each of which flow a thin film (m', m") of the treated solutions ;

— a distributor (29, 30) of the said solutions at the top of each chamber ;

— discharge devices at the base of each chamber for recovering the treated solutions which have run down ;

— the said wall (14, 22, 44) down the internal face of which runs the film brought into thermal contact with the ambient air having heat-exchange fins on its external surface and arranged approximately parallel to the direction of the « wind ».

8. Apparatus according to Claim 7, characterised in that at least one of either of the heat or cold sources being constituted by the ambient air set in motion and with or without the addition of water in any form, and the other being constituted by a heat-conductive fluid such as water, the said apparatus having the form of externally-finned tubes (41, 41') on the internal wall down which runs a portion of the mixture to be separated and consisting of an interior tube (34) through the interior of which runs the said heat-conductive fluid and on the outside wall of which circulates the other portion of the mixture to be separated, the said tubes being arranged approximately vertically and receiving at their upper part the mixture to be separated M, the residue (r) and the distillate (d) formed being recovered from their lower part.

9. Apparatus according to Claim 8, characterised in that the said finned tubes (41) have an aerodynamic profile as the wing of an aeroplane or an ellipse.

10. Apparatus according to Claim 8, or Claim 9, characterised in that the finned tubes (57) are mounted on a base (58) which carries on orientable structure (59, 60, 62) for channelling the wind in the direction of said tubes.

11. Apparatus according to Claim 7, characterised in that they consist essentially of two tubes (46, 47) communicating at one end, one of said tubes (46) being contacted externally with the cold source receiving internally in its higher part the mixture M to be separated, and a solution forming distillate (d) being recovered at its base, the other of said tubes (47) being contacted externally with the heat source receiving internally in its higher part the mixture M to be separated, and a solution forming residue (r) being recovered at its base.

12. Apparatus according to Claim 11, characterised in that the said tubes are arranged approximately superimposed coaxially.

## Patentansprüche

1. Verfahren zur Trennung einer Lösung (M) bestimmter Zusammensetzung aus mindestens zwei Bestandteilen, jeweils eines « Lösungsmittels » — flüchtiger — und eines weniger flüchtigen « Gelöststoffes » — in zwei Lösungen unterschiedlicher Zusammensetzung jeweils an Lösungsmittel verarmt — an Gelöststoff angereichert — oder « Rückstand » (r) und an Lösungsmittel angereichert — an Gelöststoff verarmt oder « Destillat » (d), bei dem man einen geschlossenen Raum (11, 21, 41, 46-47) verwendet, der im wesentlichen luftleer ist und unter einem Druck in der Nachbarschaft des Siededruckes der Lösung (M) bei der Temperatur gehalten wird, die im Inneren des Raumes herrscht, welcher eine Wand (12, 22, 42) in Berührung mit einer warmen Quelle bei höherer Temperatur aufweist als die, die in dem Raum herrscht, und gegen welchen man einen Film (m') der Lösung — zum Verarmen an Lösungsmittel — zirkulieren läßt, wobei der Raum eine andere Wand (14, 24, 44) in Berührung mit einer kalten Quelle bei niedrigem Niveau mit einer Temperatur aufweist, die z. B. durch die Umgebungsluft oder den « kalten Außenwind » gebildet ist, auf welcher Wand sich ein Film (m") der an Lösungsmittel angereicherten Lösung kondensiert und zirkuliert, wobei das Verfahren dadurch gekennzeichnet ist, daß :

— die warme Quelle sich auch auf niedrigem Niveau befindet und eine Temperatur von 20° bis 30°C größer hat als die Temperatur der « kalten Quelle » und sie nicht mit einer Wärmequelle bei hohem Niveau verbunden ist, wie z. B. einem flüssigen, festen oder gasförmigen Brennstoff oder einer elektrischen Energie, und man am Boden des Raumes die betreffende, an Lösungsmittel angereicherte Lösung oder « Destillat » (d) oder an Lösungsmittel verarmte Lösung oder « Rückstand » (r) sammelt, die im wesentlichen aus zwei Filmen (m', m") erzeugt sind, die am kopf dieses Raumes zugeführt werden,

— und man mehrere folgende Trennungen in diesen Räumen benutzt, die in Kaskaden angeordnet sind und bei Temperaturen arbeiten, die im wesentlichen identisch sind, sowie bei unterschiedlich abgestuften Drücken, wobei die Stufe (n), welche als zu trennende Lösung das Destillat (d) der unteren Stufe (n − 1) und den Rückstand (r) der höheren Stufe (n + 1) aufnimmt, wobei der letzte Rückstand in der ersten Stufe der Anlage und das letzte Destillat in der letzten Anlagestufe erhalten werden.

2. Verfahren nach Anspruch 1, dadurch gekennzeichnet, daß die warme Quelle aus der geothermischen Wärme, der Wärme gebildet ist, die von einem Solarmeßfühler und/oder natürlichen oder künstlichen Wärmeausstoßquellen bei niedrigem Niveau stammt.

3. Verfahren nach Anspruch 1 oder 2, dadurch gekennzeichnet, daß der Rückstand ($r_{n+1}$) der (n + 1)-ten Stufe in der n-ten Stufe Richtung Entstehung des Destillats ($d_n$) eingeführt wird und das Destillat ($d_{n-1}$) der (n − 1)-ten Stufe in der n-ten Stufe Richtung Entstehung des Rückstandes ($r_n$) eingeführt wird und der letzte Rückstand sowie das letzte Destillat zum Teil zur ersten Stufe Richtung Entstehung des Rückstandes ($r_1$) bzw. zur letzten Stufe Richtung Entstehung des Destillats ($d_N$) rezykliert wird.

4. Verfahren nach Anspruch 1 oder 2, dadurch gekennzeichnet, daß der Rückstand ($r_{n+1}$) der (n + 1)-ten Stufe in die Stufe n Richtung Bildung des Rückstandes ($r_n$) eingeführt wird und das Destillat ($d_{n-1}$) der (n — 1)-ten Stufe in die Stufe n Richtung Entstehung des Destillats ($d_n$) eingeführt wird.

5. Verfahren nach einem der vorhergehenden Ansprüche, dadurch gekennzeichnet, daß die zu trennende Anfangslösung M an einer Zwischenstufe der Kaskade eingeführt wird.

6. Verfahren zum Erwärmen auf eine gegebene Temperatur unter Bildung einer thermodynamischen Wärmepumpe unter Verwendung im wesentlichen eines Wärmeüberganges zwischen einer warmen Quelle und einer kalten Quelle bei niedrigen Niveaus auf die gewünschte Wärmetemperatur sowie unter Verwendung der Rückvermischungswärme zweier stark reaktiver Lösungen, die nicht ideal sind für einen « Rückstand » (r) und ein « Destillat » (d), die in einer Trenneinheit zubereitet sind, welche nach einem der vorhergehenden Ansprüche benutzt ist, wobei das Verfahren dadurch gekennzeichnet ist, daß der Rückstand (r) und das Destillat (d) unter dem geeigneten Druck in einem dichten Mischgerät (68) gemischt werden, in welchem die Rückvermischungswärme abgeführt und für die Benutzung (70) wiedergewonnen wird, und die gemischte Lösung wieder am Kopf der Trenneinheit (63) eingeführt wird nach Durchgang eines Wärmetauschers (71), welcher die Wiedererwärmung des Rückstandes (r) und des Destillats (d) vor ihrem Einführen in das Mischgerät sicherstellt.

7. Vorrichtung zur Durchführung des Verfahrens nach einem der vorhergehenden Ansprüche, wobei mindestens eine der kalten oder warmen Quellen durch in Bewegung gebrachte Luft gebildet ist, der Wasser in einer beliebigen Form zugegeben ist oder nicht, wobei sie in Kombination aufweist :

— dichte, geschlossene Räume (11, 21, 41, 46-47), welche gegenüberliegende Wände (12, 14 ; 22, 24 ; 42, 44) aufweisen, auf denen jeweils ein dünner Film (m′, m″) behandelnder Lösungen rieselt,

— einen Verteiler (29, 30) der Lösungen am Kopf jedes Raumes,

— Entleerungsvorrichtungen am Fuß des Raumes zum Sammeln der behandelten Lösungen nach dem Rieseln,

— wobei die Wand (14, 22, 44), auf deren Innenfläche der Film rieselt, der in Wärmekontakt mit der Umgebungsluft gebracht ist, auf ihrer Außenfläche Wärmetauscherrippen hat, die im wesentlichen zur « Wind »-Richtung parallel angeordnet sind.

8. Vorrichtung nach Anspruch 7, dadurch gekennzeichnet, daß mindestens eine der kalten oder warmen Quellen durch in Bewegung gebrachte Umgebungsluft gebildet ist, der Wasser in beliebiger Form zugegeben ist oder nicht, und die andere durch ein Wärme abführendes Fließmittel gebildet ist, wie z. B. Wasser, wobei die Vorrichtungen die Form von Rohren (41, 41′) haben mit Rippen außen, wobei auf der Innenwand der Rohre ein Teil des zu trennenden Gemisches rieselt, und ein inneres Rohr (34) aufweisen, welches innen von dem Wärmeträgerfließmittel durchflossen ist und auf dessen Außenwand der andere Teil des zu trennenden Gemisches zirkuliert, wobei die Rohre im wesentlichen vertikal angeordnet sind und an ihrem oberen Teil das zu trennende Gemisch M aufnehmen, wobei der gebildete Rückstand (r) und das Destillat (d) im unteren Teil gesammelt sind.

9. Vorrichtung nach Anspruch 8, dadurch gekennzeichnet, daß die mit Rippen versehenen Rohre (41) ein aerodynamisches Profil eines Flugzeugflügels oder einer Ellipse haben.

10. Vorrichtung nach Anspruch 8 oder 9, dadurch gekennzeichnet, daß die mit Rippen versehenen Rohre (57) auf einer Fußfläche (58) angebracht sind, welche einen ausrichtbaren Kanalisationsaufbau (59, 60, 62) für den Wind in Richtung der Rohre trägt.

11. Vorrichtung nach Anspruch 7, dadurch gekennzeichnet, daß sie im wesentlichen aus zwei Rohren (46, 47) gebildet ist, die durch ein Ende verbunden sind, wobei eines der Rohre (46) außen dem Kontakt mit der kalten Quelle unterworfen ist und am oberen Teil innen das zu trennende Gemisch M aufnimmt und eine Lösung unter Bildung des Destillats (d) an seiner Basis gesammelt wird, und daß das andere Rohr (47) außen der Berührung der warmen Quelle unterworfen ist, im oberen Teil innen das zu trennende Gemisch M aufnimmt und eine Lösung unter bildung des Rückstandes (r) an seiner Basis gesammelt wird.

12. Vorrichtung nach Anspruch 11, dadurch gekennzeichnet, daß die Rohre im wesentlichen koaxial und übereinander angeordnet sind.

0 093 638

FIG 1

FIG 4

FIG 2

FIG 3

FIG 5

FIG 6

2

FIG 7

38

41

FIG 8

38'  41'

FIG 9

FIG 10

FIG 11

FIG 12

66

H₂O
r1    30°c

63

64

10°c

30°c

65

NH3
d13    30°c
9 b

67

7,5%
40°c

30°c

71

40°c

30°c

135°c

145°c

135°c

68

p = 9 b

69

140°c

70

0 093 638

FIG 13